# EUROPEAN PATENT SPECIFICATION

(11) **EP 1 683 426 B1**
(45) Date of publication and mention of the grant of the patent: **14.03.2012**
(21) Application number: 06250236.4
(22) Date of filing: 17.01.2006
(51) Int. Cl.: A23G 1/00

(54) **Chocolate for food to be exposed to light**
Schokolade für an Licht auszusetzende Lebensmittel
Chocolat pour un produit alimentaire exposé à la lumière

(30) Priority: 19.01.2005 JP 2005011644
(43) Date of publication of application: 26.07.2006
(73) Proprietor: Fuji Oil Company, Ltd., Osaka-shi, Osaka 542-0086 (JP)
(72) Inventor: Kawabata, Yasushi c/o Fuji Oil Company Limited, Izumisano-shi, Osaka 598-8540 (JP); Kuramori, Koichi c/o Fuji Oil Company Limited, Izumisano-shi, Osaka 598-8540 (JP); Umeno, Koji c/o Fuji Oil Company Limited, Izumisano-shi, Osaka 598-8540 (JP)
(74) Representative: Hayes, Adrian Chetwynd

(56) References cited:
- EP-A- 0 427 544
- GB-A- 2 369 985
- US-A1- 2003 138 520
- US-B1- 6 548 099
- US-B1- 6 730 518
- PATENT ABSTRACTS OF JAPAN vol. 2002, no. 10, 10 October 2002 (2002-10-10) -& JP 2002 165561 A (ASAHI DENKA KOGYO KK), 11 June 2002 (2002-06-11)
- PATENT ABSTRACTS OF JAPAN vol. 1999, no. 09, 30 July 1999 (1999-07-30) -& JP 11 113495 A (PONY SEIKA:KK), 27 April 1999 (1999-04-27)

## Description

The present invention relates to method for reducing deterioration by light of chocolate, in particular preventing quality deterioration such as unpleasant flavor and smell even when the chocolate is placed under light exposure conditions.

Recently, chocolate is often used under light exposure conditions without using any light-shielding materials such an aluminum foil on the surface, for example, by putting chocolate on decorated cakes, birthday cakes, Christmas cakes, etc. after shaving a block of the chocolate into flakes or molding the chocolate into a plate, or by mixing chocolate with cream to preparing so-called ganache and other chocolate products. This is because, in patisseries located in underground floors of department stores, or in convenience stores, supermarkets, etc., various foods are often displayed and sold in display cases by illuminating with strong fluorescent light in order to appeal freshness and safety of the foods so as to give consumers a sense of safety, and improve appearance of the foods.

Chocolate is produced using cacao components such as cocoa mass, cocoa powder and cocoa butter, powdered milk such as whole milk powder, skim milk powder and whey powder, and sugars such as sucrose, lactose, maltose and fructose as major raw materials, and are classified into dark chocolate, milk chocolate and white chocolate. While a flavor deteriorated by light cannot be recognized in dark chocolate and milk chocolate in some cases, commercial values are remarkably decreased in white chocolate by change in components that causes unpleasant flavor and small due to a light energy when it is exposed to light. This problem is quite difficult to solve even by those skilled in the art, and milk components in white chocolate have been suspected of being the cause of this deterioration. For preventing the deterioration by light, various agents for preventing flavor deterioration have been added to foods as substances having a suppressing effect on deterioration by light. For example, JP 2003-33164 A discloses combination use of myriceline and quercetin in a specific blending ratio. JP 11-341971 A discloses use of propolis. JP 10-183164 A discloses use of at least one component selected from chlorogenic acid, caffeic acid and ferulic acid. However, the amount to be added of these additives are restricted because excess use thereof brings out their own flavors, and a sufficient effect using the additives cannot be achieved in white chocolate whose non-fat components are substantially free from cacao components.

US-A-6,730,518 discloses a method for preventing photooxidation in various products including white chocolate by blending the product with an anti-oxidant composition comprising at least one amino acid, at least one metal ion and at least one carboxylic acid.

US-A-2003/0138520 discloses a chocolate containing one or more active ingredients incorporated in a plurality of carrier bodies dispersed within the body of the confectionary product.

US-B-6,548,099 discloses a method of crystallising the lactose in a milk fat which can then be used in a chocolate.

JP-A-2002-165561 discloses the fractionation of cocoa butter to provide olein fractions and stearin fractions.

JP-A-11-113495 discloses a process for obtaining white chocolate from cocoa butter, sugar and whole milk.

GB-A-2,369,985 discloses a process for manipulating the flavour of a chocolate crumb by treating one or more of the ingredients to enhance its flavour.

EP-A-427,544 discloses a process for producing water containing chocolate in which a chocolate mix is mixed with an aqueous ingredient in the presence of a nut phase.

An object of the present invention is to provide a method of preventing quality deterioration such as unpleasant flavor and smell of chocolate whose non-fat components are free from cacao components, even when the chocolate is placed under light exposure conditions such as exposure to illumination of fluorescent light.

This object as well as other objects and advantages of the present invention will become apparent to those skilled in the art from the following description.

In order to achieve the above objects, the present inventors have intensively studied. As a result, they have unexpectedly found that deterioration by light in so-called white chocolates, i.e., chocolate whose non-fat components are free from cacao components, can be improved by using refined fats having a Y-value of 20 or less as measured using a Lovibond colorimeter after refining treatment as a hard butter (hard butter is cocoa butter and/or a cocoa butter substitute) to be blended in the chocolate. The present inventors have also found that the quality deterioration can be further suppressed by combining a specific agent for preventing flavor deterioration with the chocolate. The present invention has been completed based on these findings.

That is, as the 1st aspect, the present invention provides a method of reducing deterioration by light of chocolate whose non-fat components are free from cacao components, said chocolate being for a food to be exposed to light, which comprises blending a hard butter of refined fats having a Y-value of 20 or less as measured with a Lovibond colorimeter into the chocolate.

The 2nd aspect of the present invention is the method according to the 1st aspect, wherein the Y-value of the refined hard butter is 4 or less as measured with a Lovibond colorimeter.

The 3rd aspect of the present invention is the method according to the 1st aspect, wherein the chocolate further comprises at least one component selected from tocopherol, a tea extract and rutin.

The 4th aspect of the present invention is a method according to the first aspect where the chocolate comprises cream.

The 5th aspect of the present invention is the method according to the 4th aspect, wherein the chocolate is in the form of a ganache.

The advantages of the present invention are evident in chocolate whose non-fat components are free from cacao components. In dark chocolate and milk chocolates containing cacao mass, cocoa powder, etc., sometimes, flavor deterioration by light itself cannot be recognized.

In the hard butter to be used in the present invention (hard butter is cocoa butter and/or cocoa butter substitute), the Y-value measured with a Lovibond colorimeter after refining treatment is 20 or less, more preferably 4 or less. Further, one or more additives selected from tocopherol, a tea extract and rutin may be preferably added to the chocolate. By these measures, flavor deterioration by strong light such as light from fluorescent, i.e., deterioration by light can be effectively suppressed.

The Y-value measured with a Lovibond colorimeter used herein is that according to AOCS Official Method Cc 13e-92 Color. The size of the glass cell used is 13.3 cm (51/4 inch), and the measurement is carried out at the product temperature of the fats in the range of 35 to 40°C.

In general, chocolate is produced by using as major raw materials cacao components such as cocoa mass, cocoa powder, cocoa butter, etc., powdered milk such as whole milk powder, skim milk powder, whey powder, etc., and sugars such as sucrose, lactose, maltose, fructose, etc. Sometimes, vegetable fats and oils collected from soybeans, rapeseeds, sunflower seeds, palm fruits, coconut fruits, etc., and processed (e.g., hydrogenation, interesterification, fractionation, etc.) may be used as substitutes of a part or all of fat components of cacao, i.e., cacao butter, though they cannot be categorized into "chocolate" depending on the regulation of the law in certain countries. These fats and oils are called as cocoa butter substitutes.

Examples of chocolate used in the present invention include white chocolate, i.e., chocolate whose fat components are free from cacao components, and various colored and/or flavored chocolate products prepared by flavoring and coloring the chocolate with fruit juice powders, pigments, flavors and acidulants such as strawberry chocolate, orange chocolate, green tea chocolate, etc.

As described above, examples of the hard butter used in the present invention include cocoa butter and cocoa butter substitutes. Examples of the cocoa butter substitutes include tempering type hard butters, non-tempering type hard butters and laurin type hard butters. Examples of fat and oil materials of the cocoa butter substitutes include vegetable fats and oils such as rapeseed oil, soybean oil, sunflower oil, cotton seed oil, peanut oil, rice bran oil, corn oil, safflower oil, olive oil, kapok oil, sesame oil, evening primrose oil, palm oil, shea fat, sal fat, coconut oil and palm kernel oil; and animal fats and oils such as milk fat, tallow, lard, fish oil and whale oil. These fats and oils may be used alone, or as combinations thereof. Further, their processed products such as hydrogenated, fractionated and interesterified products can be also used.

The hard butter should be used after subjecting to one or more refining treatment steps including phosphate treatment, deacidification, bleaching, deodorization, etc. The Y-value after refining is be 20 or less, preferably 4 or less, as measured with a Lovibond colorimeter. When the Y-value by a Lovibond colorimeter exceeds 20, it is difficult to suppress flavor deterioration by strong light such as that from fluorescent, i.e., deterioration by light.

Tocopherol to be used in the present invention is a per se well known material, and is commercially available. Tocopherol may be a purified product or non-purified products extracted form natural plants, or may be a synthetic product. While tocopherol may be a pure component such as δ-tocopherol or a mixture of α-, β-, γ-and δ-tocopherol, it preferably has a low α-content and high δ-content. Tocopherol may be diluted with a fat or oil, dextrin and the like before use. Examples of commercially available tocopherol include Oil Super 80 (trade name, manufactured by Riken Vitamin Co.) containing 64% of tocopherol. Tocopherol is added in a proportion of 0.04 to 0.5% by weight, preferably 0.07 to 0.3% by weight based on the total weight of the chocolate. The desired effect cannot be obtained when the amount of tocopherol used is below the above lower limit, while flavor and color are impaired when the amount used exceeds the above upper limit above.

The tea extract used in the present invention is extracted from, for example, green tea, oolong tea, or black tea or a processed product thereof. Preferably, fresh tea leaves are extracted with hot ethanol or hot water. Since the tea extract is insoluble in fats and oils, preferably, the extract is changes its nature to oil soluble, for example, by dispersing it into an emulsifier, an alcohol or oil, and then added to the fats. As the tea extract, commercially available products can be used. Examples thereof include Suncatol (trade name, manufactured by Taiyo Chemical Co.), Sun Food (trade name, manufactured by Sankyo Co.) and Sun Catechin (trade name, manufactured by Mitsui Norin Co.). These commercially available tea extract products contain about 10% by weight of the tea extract. The concentration of the tea extract added to the fat may be appropriately selected depending on the purpose and the desired effect. Preferably, the tea extract is used in a proportion of 0.001 to 1% by weight, more preferably in a proportion of 0.05 to 0.4% by weight based on the total weight of the chocolate. The effect for suppressing deterioration by light is insufficient when the amount of addition is less than 0.01% by weight, while flavor becomes bad when the amount of addition exceeds 1% by weight since bitter taste from the tea extract is recognized.

Rutin to be used in the present invention is a per se well known material, and is commercially available. Rutin may be a purified or non-purified product extracted from natural plants, or may be obtained by enzyme treatment. Examples of the commercially available product include αG-Rutin (trade name, manufactured by Toyo Sugar Co., rutin content 82%). Rutin may be added in a proportion of 0.005 to 0.2% by weight, preferably 0.007 to 0.1% by weight based on the total weight of the chocolate. The expected effect cannot be obtained when the amount of addition of rutin is less than the above lower limit, while flavor and color are impaired when the amount of addition of rutin exceeds the above upper limit.

One or more of tocopherol, the tea extract and rutin are preferably added in the present invention, and it is more effective to add a combination of at least two of them, thereby sufficiently suppressing the flavor deterioration by strong light such as that from fluorescent, i.e., deterioration by light.

Components of the chocolate other than those such as milk components, sugars, emulsifying agents, pigments, flavors, preservatives and acidulants can be conventional ones and they may be appropriately selected according to a particular purpose.

The chocolate can be produced by a conventional production process. For example, the above-described raw materials are appropriately selected, and are mixed and refined using a conventional roll refiner and conche. A process using an attritor can also be employed. Any physical properties such as grain size, viscosity and fat content, any shapes including those for frozen desert, coating and decoration can be employed as long as they can be used for foods to be exposed to light.

The following Examples further illustrate the present invention in detail but are not construed to limit the scope of the present invention. All the percents (%) and parts in the following examples are by weight, unless otherwise stated.

The method for evaluating white chocolate for foods to be exposed to light is as follows.

On the assumption that the chocolate was used as topping on a cake, the chocolate was sliced into flakes and spread on a dish so as to avoid overlapping to one another, and was illuminated with fluorescent light having the intensity of 2500 Lx in an atmosphere at 20°C for 18 hours. The chocolate was subjected to a sensory test by 20 professional panelists, and was evaluated in terms of 5 grades: grade 5 (no flavor change), grade 4 (slight flavor change), grade 3 (flavor change but keeping commercial value), grade 2 (no commercial value with evident flavor change) and grade 1 (unbearable flavor). Chocolate not illuminated with fluorescent light and maintained in the same atmosphere with light shielding was used as a control. Chocolate which was evaluated as grade 3 to grade 5 by all the panelists was judged to have an acceptable flavor, and chocolate which was evaluated as grade 2 or grade 1 by at least one panelist was judged to have an unacceptable flavor.

### Example 1

Commercially available cocoa butter (trade name: Astra A, manufactured by ADM Co.) was subjected to degumming, deacidification, deodorization and decolorization treatment according to a conventional method to obtain refined cocoa butter having a Y-value of 3.5 as measured with a Lovibond colorimeter. White chocolate was prepared by mixing 33 parts of cocoa butter treated as described above with 30 parts of whole milk powder, 37 parts of granular sugar and 0.4 parts of soybean lecithin by a conventional method using a roll refiner and conche. This white chocolate had less cocoa butter flavor with a clear milky taste. After subjecting the chocolate to tempering treatment according to a conventional method, it was cast, and the solidified white chocolate was shaved with a knife into flakes, processed into flake chocolate as a topping material of a cake. The white chocolate was evaluated by a sensory test according to the method for evaluating white chocolate for foods to be exposed to light as described above. The result was: grade 5 (no flavor change) by one panelist, grade 4 (slight flavor change) by 10 panelists, grade 3 (flavor change but keeping commercial value) by 9 panelists, grade 2 (no commercial value with evident flavor change) by no panelist and grade 1 (unbearable flavor) by no panelist. This white chocolate was judged to have an acceptable flavor.

### Comparative Example 1

Commercially available cocoa butter (trade name: Astra A, manufactured by ADM Co., Y-value of 75 as measured with a Lovibond colorimeter) was used as such without any treatments in place of the refined cocoa butter used in Example 1 to prepare conventional white chocolate. The white chocolate had a very strong cocoa butter flavor. After subjecting the chocolate to tempering treatment according to a conventional method, it was cast, and the solidified white chocolate was shaved with a knife into flakes, and processed into flake chocolate as a topping material of a cake. The white chocolate was evaluated by the sensory test according to the method for evaluating white chocolate for foods to be exposed to light as described above as in Example 1. The result was: grade 5 (no flavor change) by no panelist, grade 4 (slight flavor change) by no panelist, grade 3 (flavor change but keeping commercial value) by 2 panelists, grade 2 (no commercial value with evident flavor change) by 16 panelists and grade 1 (unbearable flavor) by 2 panelists. This white chocolate was judged to have an unacceptable flavor.

### Example 2

Commercially available cocoa butter (trade name: Astra A, manufactured by ADM Co.) was subjected to degumming, deacidification, deodorization and decolorization treatment according to a conventional method to obtain cocoa butter having a Y-value of 3.5 as measured with a Lovibond colorimeter. White chocolate was prepared by mixing 33 parts of cocoa butter treated as described above with 30 parts of whole milk powder, 37 parts of granular sugar, 0.4 parts of soybean lecithin, 0.1 parts of tocopherol (trade name Riken Oil Super 80, manufactured by Riken Vitamin Co; tocopherol content 64%) and 0.01 parts of rutin (trade name α-rutin PS, manufactured by Toyo Sugar Co; rutin content 82%) by a conventional method using a roll refiner and conche. This white chocolate had less cocoa butter flavor, with a clear milky taste as that of the white chocolate in Example 1. The flavor was excellent without recognition of any abnormal flavor originating from additives. After subjecting the chocolate to tempering treatment according to a conventional method, it was cast, and the solidified white chocolate was shaved with a knife into flakes, and processed into flake chocolate as a topping material of a cake. The white chocolate was evaluated by a sensory test according to the method for evaluating white chocolate for foods to be exposed to light as described above as in Example 1. The result was: grade 5 (no flavor change) by 2 panelists, grade 4 (slight flavor change) by 16 panelists, grade 3 (flavor change but keeping commercial value) by 2 panelists, grade 2 (no commercial value with evident flavor change) by no panelist and grade 1 (unbearable flavor) by no panelist. This white chocolate was judged to have an acceptable flavor.

### Example 3

Commercially available cocoa butter (trade name: Astra A manufactured by ADM Co.) was subjected to degumming, deacidification, deodorization and decolorization treatment according to a conventional method to obtain cocoa butter having a Y-value of 10 as measured with a Lovibond colorimeter. White chocolate was prepared by mixing 33 parts of cocoa butter treated as described above with 30 parts whole milk powder, 37 parts of granular sugar and 0.4 parts of soybean lecithin by a conventional method using a roll refiner and conche. This white chocolate had a milder cocoa butter flavor as compared with the white chocolate prepared in Example 1. After subjecting the chocolate to tempering treatment a conventional method, it was cast, and the solidified white chocolate was shaved with a knife into flakes, and processed into flake chocolate as a topping material of a cake. The white chocolate was evaluated by a sensory test according to the method for evaluating white chocolate for foods to be exposed to light. The result was: grade 5 (no flavor change) by no panelist, 4 (slight flavor change) by 6 panelists, grade 3 (flavor change but keeping commercial value) by 14 panelists, grade 2 (no commercial value with evident flavor change) by no panelist and grade 1 (unbearable flavor) by no panelist. This white chocolate was judged to have an acceptable flavor.

### Example 4

Commercially available cocoa butter (trade name: Astra A, manufactured by ADM Co.) was subjected to degumming, deacidification, deodorization and decolorization treatment according to a conventional method under the same conditions as in Example 3 to obtain cocoa butter having a Y-value of 10 as measured with a Lovibond colorimeter. White chocolate was prepared by mixing 33 parts of cocoa butter treated as described above with 30 parts of whole milk powder, 37 parts of granular sugar, 0.4 parts of soybean lecithin, 0.1 parts of tocopherol (trade name: Riken Oil Super 80, manufactured by Riken Vitamin Co; tocopherol content 64%) and 0.01 parts of rutin (trade name: α-rutin PS, manufactured by Tokyo Sugar Co.: rutin content 82%) by a conventional method using a roll refiner and conche. This white chocolate had a mild cocoa butter flavor as the white chocolate in Example 3, and was excellent without recognition of any abnormal flavor originating from additives. After subjecting the product to tempering treatment according to a conventional method, it was cast, and the solidified white chocolate was shaved with a knife into flakes, and processed into flake chocolate as a topping material of a cake. The white chocolate was evaluated by a sensory test according to the method for evaluating white chocolate for foods to be exposed to light as in Example 1. The result was: grade 5 (no flavor change) by one panelist, grade 4 (slight flavor change) by 10 panelists, grade 3 (flavor change but keeping commercial value) by 9 panelists, grade 2 (no commercial value with evident flavor change) by no panelist and grade 1 (unbearable flavor) by no panelist. This white chocolate was judged to have an acceptable flavor.

### Example 5

White chocolate was prepared by mixing 33 parts of commercially available tempering type hard butter (trade name: Melano SS7, manufactured by Fuji Oil Company Limited; Y-value of 2.5 by a Lovibond colorimeter) with 30 parts of whole milk powder, 37 parts of granular sugar, 0.4 parts of soybean lecithin, 0.1 parts of tocopherol (trade name: Riken Oil Super 80, manufactured by Riken Vitamin Co; tocopherol content 64%) and 0.01 parts of rutin (trade name: α-rutin PS, manufactured by Tokyo Sugar Co.: rutin content 82%) by a conventional method using a roll refiner and conche. This white chocolate had a clear milky taste without recognition of any abnormal flavor originating from additives. After subjecting the chocolate to tempering treatment according to a conventional method, it was cast, and the solidified white chocolate was shaved with a knife into flakes, and processed into flake chocolate as a topping material of a cake. The white chocolate was evaluated by a sensory test according to the method for evaluating white chocolate for foods to be exposed to light as described above. The result was: grade 5 (no flavor change) by 4 panelists, grade 4 (slight flavor change) by 15 panelists, grade 3 (flavor change but keeping commercial value) by one panelist, grade 2 (no commercial value with evident flavor change) by no panelist and grade 1 (unbearable flavor) by no panelist. This white chocolate was judged to have an acceptable flavor.

### Example 6

A chocolate product was prepared by blending 60 parts of white chocolate prepared in Example 1 with 40 parts of commercially available fresh cream (manufactured by Meiji Dairies Co.; milk fat content of 47%) according to a conventional method. The chocolate product prepared had a clear milky taste. This chocolate was cut into a size of 5 x 20 x 20 mm, and the resulting plates of chocolate were spread on a dish so as to avoid overlapping one another. The chocolate was evaluated by 20 panelists as in Example 1 after irradiating with fluorescent light with the intensity of 2500 Lx in an atmosphere at 5°C for 18 hours. The result was: grade 5 (no flavor change) by 2 panelists, grade 4 (slight flavor change) by 15 panelists, grade 3 (flavor change but keeping commercial value) by 3 panelists, grade 2 (no commercial value with evident flavor change) by no panelist and grade 1 (unbearable flavor) by no panelist. This white chocolate was judged to have an acceptable flavor.

### Comparative Example 2

A chocolate product was prepared by mixing 60 parts of white chocolate prepared in Comparative Example 1 with 40 parts of commercially available fresh cream (manufactured by Meiji Dairies Co.; milk fat content of 47%) according to a conventional method. The chocolate product had strong cocoa butter flavor as compared with the chocolate product of Example 6. This chocolate was cut into a size of 5 x 20 x 20 mm, and the resulting plates of chocolate were spread on a dish so as to avoid overlapping from one another, and evaluated by 20 panelists as in Example 1 after irradiating with fluorescent light with the intensity of 2500 Lx in an atmosphere at 5°C for 18 hours. The result was: grade 5 (no flavor change) by no panelist, grade 4 (slight flavor change) by no panelist, grade 3 (flavor change but keeping commercial value) by 2 panelists, grade 2 (no commercial value with evident flavor change) by 14 panelists and grade 1 (unbearable flavor) by 4 panelists. This white chocolate was judged to have an unacceptable flavor.

### Example 7

White chocolate for coating frozen desert was prepared by blending 40 parts of a tempering type hard butter (trade name: Melano SS7, manufactured by Fuji Oil Company Limited; Y-value of 2.5 by a Lovibond colorimeter) with 20 parts of refined coconut oil (manufactured by Fuji Oil Company Limited; Y-value of 2.0 by a Lovibond colorimete), 15 parts of whole milk powder, 25 parts of granulated sugar, 0.4 parts of soybean lecithin, 0.1 parts of tocopherol (trade name: Riken Oil Super 80, manufactured by Riken Vitamin Co.; tocopherol content 64%), 0.01 parts of rutin (trade name: α-rutin PS, manufactured by Toyo Sugar Co.; rutin content 82%) and 0.1 parts of a tea extract (trade name: Suncatol, manufactured by Taiyo Chemical Co.) by a conventional method using a roll refiner and conche. The white chocolate had a clear milky taste with smooth mouth meltability. The white chocolate 2 mm in thickness was enrobed on commercially available ice cream, and flavor of the white chocolate part on the ice cream was evaluated by 20 panelists as in Example 1 after illuminating with fluorescent light having the intensity of 2500 Lx in an atmosphere at -20°C for 18 hours. The result was: grade 5 (no flavor change) by 5 panelists, grade 4 (slight flavor change) by 13 panelists, grade 3 (flavor change but keeping commercial value) by 2 panelists, grade 2 (no commercial value with evident flavor change) by no panelist and grade 1 (unbearable flavor) by no panelist. This white chocolate was judged to have an acceptable flavor.

### Industrial Applicability

The present invention relates to chocolate whose non-fat components are substantially free from cacao components, and which is capable of preventing quality deterioration such as unpleasant flavor and smell even when the chocolate is placed under light exposure conditions such as exposure to illumination of fluorescent light, and having resistance to deterioration by light.

## Claims

1. A method of reducing deterioration by light of chocolate whose non-fat components are free from cacao components, said chocolate being for a food to be exposed to light, which comprises blending a hard butter of refined fats having a Y-value of 20 or less as measured with a Lovibond colorimeter into the chocolate.

2. The method according to claim 1, wherein the Y-value of the refined hard butter is 4 or less as measured with a Lovibond colorimeter.

3. The method according to claim 1 or claim 2 wherein the chocolate further comprises at least one component selected from tocopherol, a tea extract and rutin.

4. The method according to any one of claims 1 to 3, wherein the chocolate further comprises cream.

5. The method according to claim 4, wherein the chocolate is in the form of a ganache.

6. The method according to any one of claims 1 to 5, wherein the chocolate is white chocolate.

## Patentansprüche

1. Verfahren zur Verringerung der durch Licht bedingten Alterung von Schokolade, deren fettfreie Bestandteile frei von Kakaobestandteilen sind und die für ein Nahrungsmittel bestimmt ist, das Licht ausgesetzt ist, welches das Mischen einer harten Butter von raffinierten Fetten, die einen mit einem Loviband-Kolorimeter gemessenen Y-Wert von 20 oder weniger haben, in die Schokolade umfasst.

2. Verfahren gemäß Anspruch 1, wobei der mit einem Loviband-Kolorimeter gemessene Y-Wert der raffinierten harten Butter 4 oder weniger ist.

3. Verfahren gemäß Anspruch 1 oder Anspruch 2, wobei die Schokolade weiterhin mindestens einen Bestandteil ausgewählt aus Tocopherol, einem Teeextrakt und Rutin umfasst.

4. Verfahren gemäß einem der Ansprüche 1 bis 3, wobei die Schokolade weiterhin Sahne umfasst.

5. Verfahren gemäß Anspruch 4, wobei die Schokolade in Form einer Ganache vorliegt.

6. Verfahren gemäß einem der Ansprüche 1 bis 5, wobei die Schokolade weiße Schokolade ist.

## Revendications

1. Procédé pour réduire la détérioration par la lumière de chocolat dont les composants non gras sont exempts de composants du cacao, ledit chocolat étant destiné à un aliment devant être exposé à la lumière, qui comprend le mélange d'un beurre dur de matières grasses raffinées ayant une valeur Y de 20 ou moins, telle que mesurée avec un colorimètre Lovibond dans le chocolat.

2. Procédé selon la revendication 1, dans lequel la valeur Y du beurre dur raffiné est de 4 ou moins, telle que mesurée avec un colorimètre Lovibond.

3. Procédé selon la revendication 1 ou la revendication 2, dans lequel le chocolat comprend en outre au moins un composant choisi parmi le tocophérol, un extrait de thé et la rutine.

4. Procédé selon l'une quelconque des revendications 1 à 3, dans lequel le chocolat comprend en outre de la crème.

5. Procédé selon la revendication 4, dans lequel le chocolat est sous la forme d'une ganache.

6. Procédé selon l'une quelconque des revendications 1 à 5, dans lequel le chocolat est du chocolat blanc.
